# FASCICULE DE BREVET EUROPEEN

(11) **EP 1 442 977 B1**
(45) Date de publication et mention de la délivrance du brevet: **25.03.2009**
(21) Numéro de dépôt: 04001569.5
(22) Date de dépôt: 26.01.2004
(51) Int. Cl.: B64D 15/12, B64C 27/32

(54) **Installation de transmission d'énergie et/ou de signal entre un rotor et la structure d'un giravion**
Einrichtung zur Energie- und/oder Signalübertragung zwischen einem Rotor und der Struktur eines Drehflüglers
Arrangement for energy and/or signal transmission between a rotor and a rotorcraft structure

(30) Priorité: 28.01.2003 FR 0300914
(43) Date de publication de la demande: 04.08.2004
(73) Titulaire: EUROCOPTER, 13725 Marignane Cédex (FR)
(72) Inventeur: Scala, Vincent, 13680 Lancon De Provence (FR); Faure, Thierry, 13140 Miramas (FR)
(74) Mandataire: Pouillot, Laurent Pierre Paul

(56) Documents cités:
- FR-A- 2 751 794
- FR-A- 2 764 578
- US-A- 2 473 147

## Description

L'invention concerne une installation de transmission d'énergie et/ou d'au moins un signal entre un rotor et la structure d'un giravion, ou aéronef à voilure tournante.

On sait que les giravions sont amenés à voler dans des conditions climatiques pouvant entraîner une accumulation de givre, qui se produit plus particulièrement sur les surfaces aérodynamiques des giravions, notamment sur les voilures de ces derniers, et plus spécifiquement sur les pales de leurs rotors. Afin de lutter contre ce phénomène d'accumulation de givre, pouvant conduire à la perte de l'aéronef, il a été proposé depuis longtemps d'équiper les giravions de dispositifs qui empêchent ou suppriment cette accumulation de givre sur les pales, et qui sont en conséquence respectivement dénommés antigivreurs ou dégivreurs.

Ces dispositifs comportent différents moyens techniques intégrés aux pales, ou rapportés sur ces dernières, comme par exemple des résistances électriques, intégrées dans les bords d'attaque des pales, et alimentées en courant électrique à partir d'un réseau de bord du giravion, pour réchauffer les bords d'attaque au point d'empêcher la formation du givre, dans le cas d'antigivreurs, ou pour assurer la fusion du givre ou de la glace formé(e) sur les bords d'attaque, dans le cas de dégivreurs.

Il a également été déjà proposé d'utiliser des moyens pneumatiques ou hydrauliques, tels que des coussins gonflables, équipant des pales au niveau de leurs bords d'attaque, et alimentés en fluide sous pression depuis un réseau de distribution à bord de l'aéronef, pour assurer par exemple une expulsion de la glace déposée, par gonflage de tels coussins.

Que l'énergie transmise aux antigivreurs ou dégivreurs soit électrique, hydraulique ou pneumatique, il est toujours nécessaire de faire intervenir au moins un collecteur rotatif, pour distribuer cette énergie depuis la structure du giravion, prise comme repère fixe de référence, vers chacune des pales du rotor, pris comme repère tournant.

En outre, l'alimentation en énergie de dégivreurs ou d'antigivreurs n'est pas la seule application, pour laquelle il est nécessaire d'assurer une transmission depuis une source ou un générateur supporté par la structure du giravion, donc en repère fixe, vers au moins un organe récepteur monté sur le rotor, donc en repère tournant. D'autres applications peuvent être, par exemple, la surveillance d'éléments tournants, ce qui nécessite la transmission d'une alimentation en énergie de la structure du giravion, en repère fixe, vers au moins une caméra vidéo, montée sur le rotor, donc en repère tournant, et, en sens opposé, la transmission de signaux vidéo de la ou des caméras, en repère tournant, vers un enregistreur et/ou moniteur de surveillance, en repère fixe, ou encore le suivi en temps réel de paramètres mesurés par des capteurs implantés sur des organes tournants du rotor, tels que les pales ou le moyeu, et transmettant des signaux desdits capteurs, en repère tournant, vers des équipements embarqués dans la cellule du giravion, en repère fixe, ces capteurs pouvant être, par exemple, des accéléromètres, ou des capteurs de contraintes ou de pression.

L'installation de l'invention répond ainsi au problème général de la transmission d'énergie et/ou d'au moins un signal, de nature électrique, pneumatique, hydraulique, optique ou autre, entre un rotor et la structure d'un giravion, spécifiquement du type dans lequel le rotor comprend :
- un ensemble mât-moyeu au moins en partie tubulaire, coaxial autour d'un axe longitudinal du mât, et destiné à être entraîné en rotation autour dudit axe, qui est l'axe de rotation du rotor, par rapport à la structure du giravion, et,
- au moins deux pales à pas variable, dont chacune est reliée au moyeu et destinée à être entraînée par ledit moyeu en rotation autour dudit axe de rotation, et est susceptible de débattements angulaires au moins en pas, autour d'un axe de changement de pas de la pale correspondante, lesdits débattements angulaires en pas étant commandés par déplacement axial, parallèlement à l'axe de rotation, d'un plateau de commande de pas, relié à chaque pale par une biellette de pas, et solidaire en rotation dudit ensemble mât-moyeu, ledit plateau de commande étant entraîné en translation axiale par rapport audit ensemble mât-moyeu par une tige centrale et non-tournante de commande de pas, s'étendant et coulissant sensiblement axialement dans une partie tubulaire de l'ensemble mât-moyeu.

Il en est particulièrement ainsi des rotors arrière (anticouple) d'hélicoptère, dont les mâts et moyeux sont creux et traversés axialement et partiellement par ladite tige centrale et non-tournante de commande de pas, dont les coulissements axiaux dans la partie tubulaire de l'ensemble mât-moyeu sont commandés par au moins un actionneur de commande pilote, ou actionneur servocommande, fixé à la structure du giravion.

Un rotor de giravion de ce type est décrit dans le brevet français 2 764 578 de la Demanderesse, auquel on se reportera pour davantage de précisions sur la structure et la commande d'un tel rotor.

En considérant, à titre d'exemple, l'application au dégivrage ou à l'antigivrage des pales d'un rotor arrière d'hélicoptère, la technique générale actuellement mise en oeuvre sur un rotor arrière tel que celui décrit dans le brevet français précité, consiste à disposer, autour du mât rotor, la partie interne, ou centrale, et tournante, ou rotorique, d'un collecteur rotatif, et de relier la partie externe, ou périphérique, fixe, ou statorique, de ce collecteur, à la boîte de transmission auxiliaire, qui renferme les engrenages entraînant en rotation le mât et le rotor. Le seul mouvement relatif entre l'ensemble mât-rotor arrière de l'hélicoptère et la boîte de transmission auxiliaire est un mouvement de rotation. Une ligne fixe de transmission d'énergie, par exemple un câble électrique, rassemblant de préférence plusieurs conducteurs électriques, est fixée sur la boîte de transmission auxiliaire et permet d'alimenter la partie périphérique statorique du collecteur. Au moyen de dispositifs bien connus, tels que des balais frottant sur des pistes, l'énergie électrique (dans cet exemple) est transmise à la partie interne rotorique ou tournante du collecteur, et est distribuée, depuis cette partie rotorique du collecteur, à chacune des pales fixées au moyeu du rotor par une ligne de transmission tournante, solidaire du mât rotor, se prolongeant vers chacune des pales par l'une respectivement de plusieurs liaisons électriques s'étendant entre un point fixe du mât rotor et un point fixe sur la pale correspondante, par exemple un connecteur de dégivrage ou d'antigivrage accessible sur le pied de ladite pale.

L'architecture de l'installation est sensiblement la même, lorsque le collecteur rotatif électrique et les lignes fixe et tournante(s) de transmission, constituées de conducteurs électriques, sont remplacés par respectivement un collecteur rotatif de fluide sous pression et des conduites fixe et tournante(s) d'alimentation en fluide sous pression, dans le cas de dispositifs dégivreurs ou antigivreurs pneumatiques ou hydrauliques.

Du fait de l'installation d'un tel collecteur rotatif à l'extérieur du mât rotor, le diamètre des pistes sur lesquelles frottent les balais est relativement important. De plus, la vitesse de rotation d'un rotor arrière d'hélicoptère étant d'environ 25 t/s, la vitesse tangentielle ou linéaire relative des balais par rapport aux pistes est relativement importante, ce qui entraîne une usure des pistes et/ou des balais, dans des délais jugés trop courts par les utilisateurs, puisque des interventions s'avèrent nécessaires toutes les cinq cents heures de fonctionnement environ. Des interventions de maintenance doivent donc être fréquemment réalisées sur de tels ensembles. Egalement du fait de l'installation d'un tel collecteur rotatif autour du mât rotor, entre la boîte de transmission auxiliaire et le moyeu du rotor arrière, la dépose de ce collecteur impose la dépose du mât rotor. Pour ce faire, les interventions de maintenance portent généralement sur une dépose complète de l'ensemble constitué de la servocommande (actionneur et tige de commande), la boîte de transmission auxiliaire, le mât rotor, le moyeu et les pales. Une fois cet ensemble déposé, il faut ouvrir la boîte de transmission auxiliaire, pour pouvoir libérer le passage du collecteur autour du mât rotor, et donc démonter la servocommande, ouvrir le couvercle de la boîte de transmission auxiliaire, démonter au moins une roue de pignon d'entraînement du rotor, puis désassembler ledit couvercle et le mât rotor. Ces opérations de maintenance représentent donc plusieurs dizaines d'heures de travail, nécessitent l'intervention d'au moins deux personnes qualifiées, et ne peuvent être réalisées que dans un atelier agréé.

En outre, parmi les actions de maintenance nécessaires, figurent aussi les actions dues aux endommagements du collecteur par des agents extérieurs (eau, sable, brouillard salin,...), du fait de son installation à l'extérieur du mât rotor.

On connaît également, par le brevet français 2 751 794 de la Demanderesse considéré comme état de l'art antérieur le plus proche, un dispositif de connexion entre deux câbles, dont l'un peut être mobile par rapport à l'autre en translation et/ou rotation, ce dispositif étant tel qu'il peut servir de collecteur électrique. La figure 5a de ce brevet représente un tel dispositif de connexion, agencé en collecteur installé à l'intérieur d'une embase tubulaire de moyeu d'un rotor arrière d'hélicoptère, dans lequel un câble d'alimentation du collecteur est mobile en translation solidaire de la tige de servocommande et est relié à une partie non-tournante du collecteur, lequel est télescopique, car constitué d'un premier étage, agencé en collecteur rotatif, auquel est associé un deuxième étage, agencé en collecteur linéaire. Un câble tournant de sortie de ce deuxième étage en collecteur linéaire arrive à un bornier électrique de répartition, fixé sur la partie centrale du moyeu, et d'où repartent des câbles tournants pour alimenter les pales du rotor.

Un inconvénient majeur associé à ce type de collecteur est un risque de blocage, au niveau du second étage agencé en collecteur linéaire, du mouvement linéaire correspondant à la commande de pas du rotor. En effet, un tel blocage n'est pas admissible, car il provoque inévitablement la perte de contrôle en lacet de l'hélicoptère, pouvant entraîner l'écrasement de ce dernier.

Le problème à la base de l'invention est de proposer une installation de transmission d'énergie et/ou d'au moins un signal entre un rotor du type présenté ci-dessus et la structure d'un giravion le comportant, l'installation permettant d'intégrer au moins un collecteur rotatif, en particulier un collecteur de dégivrage, de fiabilité augmentée, par rapport à ceux de l'état de la technique, et permettant une maintenance simplifiée, plus économique, et respectant les objectifs de certification en terme de vulnérabilité (impact aux oiseaux, pluie, brouillard salin,...).

En particulier, l'invention a pour objet une installation du type présenté ci-dessus, permettant de respecter des objectifs de fiabilité prévoyant un intervalle moyen entre défaillances supérieur à 1.500 heures et associés à un coût de maintenance minimisé.

A cet effet, l'installation de transmission d'énergie et/ou d'au moins un signal entre un rotor du type présenté ci-dessus et la structure d'un giravion le comportant se caractérise en ce qu'elle comprend au moins un collecteur rotatif, monté dans ladite partie tubulaire dudit ensemble mât-moyeu, et coaxial autour dudit axe de rotation, et dont une partie centrale statorique est solidaire en translation axiale de ladite tige centrale coulissante, et autour de laquelle est montée tournante une partie périphérique rotorique, solidaire en rotation dudit plateau de commande et solidaire en translation de ladite partie centrale statorique, qui est reliée à la structure du giravion par au moins une ligne de transmission non-tournante, dont au moins un tronçon s'étend sensiblement le long d'au moins une portion de ladite tige centrale, ladite partie périphérique rotorique étant reliée audit rotor par au moins une ligne de transmission tournante liée en au moins un point audit rotor.

Bien entendu, les lignes non-tournante(s) et tournante(s) peuvent comporter chacune au moins un conducteur électrique, auquel cas le collecteur rotatif est un collecteur électrique, mais il est également possible que les lignes non-tournante(s) et tournante(s) comportent chacune au moins une conduite de fluide sous pression, auquel cas le collecteur rotatif est un collecteur de fluide sous pression, en particulier hydraulique ou pneumatique.

Avantageusement, au moins un tronçon de la ou chaque ligne non-tournante peut s'étendre dans au moins une portion tubulaire de la tige centrale, pour réduire l'encombrement et améliorer la protection de la ou des lignes non-tournante(s).

En outre, au moins une ligne non-tournante, et de préférence chacune d'elles, comporte au moins un tronçon souple, destiné à se déformer pour s'accommoder sans dommage des déplacements axiaux dudit collecteur et de ladite tige centrale par rapport à ladite structure du giravion, et au moins une ligne tournante, de préférence chacune d'elles, comporte au moins un tronçon souple, destiné à se déformer pour s'accommoder sans dommage des déplacements axiaux dudit correcteur par rapport audit ensemble mât-moyeu.

Ainsi, l'idée principale à la base de l'invention consiste à installer un collecteur rotatif, de type connu et de faible diamètre, à l'intérieur d'un ensemble mât-moyeu d'un rotor, en particulier arrière d'hélicoptère, en lui associant au moins une ligne non-tournante et au moins une ligne tournante comportant des tronçons souples, pour supporter sans dommage les mouvements axiaux du collecteur, dont la partie centrale statorique est reliée à la tige de commande, l'amplitude des mouvements axiaux étant de l'ordre de 100 mm, sur la plupart des rotors arrière (anticouple), et dont la partie externe et la ou les lignes tournantes sont solidaires en rotation du plateau de commande de l'ensemble mât-moyeu.

Dans un premier mode de réalisation, l'installation comprend au moins une ligne tournante, et de préférence autant de lignes tournantes que le rotor comporte de pales, reliant ladite partie rotorique du collecteur à l'une respectivement des pales et comportant au moins un tronçon souple, se déformant en flexion entre un point de liaison de ladite ligne tournante à ladite partie rotorique du collecteur et un point de fixation de ladite ligne tournante sur ladite pale ou un organe solidaire en rotation de ladite pale, afin que les lignes tournantes supportent les déplacements axiaux relatifs entre le plateau de commande et l'ensemble mât-moyeu du rotor.

Dans un second mode de réalisation, l'installation comprend au moins une ligne tournante comportant au moins un tronçon souple sensiblement hélicoïdal autour de l'axe de rotation, pour compenser les déplacements axiaux relatifs entre le collecteur et l'ensemble mât-moyeu, et s'étendant entre la partie rotorique du collecteur et un point fixe d'une partie centrale du moyeu, d'où ladite ligne tournante peut être prolongée vers l'une au moins des pales du rotor, et de préférence vers chacune d'elles, par un embranchement spécifique de ladite ligne tournante, à savoir un conducteur électrique spécifique, dans le cas où ladite ligne tournante est un câble tournant rassemblant plusieurs conducteurs électriques.

Dans ce second mode de réalisation, il est avantageux que la ligne tournante avec son tronçon souple hélicoïdal soit au moins en partie logée dans un dispositif de protection tubulaire, sensiblement coaxial autour de l'axe de rotation, et comportant un premier organe tubulaire, solidaire en translation axiale et en rotation dudit plateau de commande, et dans lequel est logé un premier tronçon de ladite ligne tournante qui est adjacent à la partie rotorique dudit collecteur, et, de préférence également, un deuxième organe tubulaire, solidaire du moyeu, et dans lequel est logé le tronçon souple hélicoïdal de la ligne tournante.

Dans ce cas, le premier tronçon de la ligne tournante est avantageusement maintenu excentré à la périphérie interne du premier organe tubulaire, lequel est solidaire d'une partie centrale annulaire du plateau de commande, de sorte à conserver un évidement central permettant l'accessibilité à la partie centrale statorique du collecteur, depuis le dessus du moyeu.

Lorsque le dispositif de protection comprend deux organes tubulaires, un espacement axial et/ou radial est avantageusement maintenu entre les deux organes tubulaires du dispositif de protection, de sorte à éviter toute interférence lors de leurs déplacements axiaux respectifs.

Dans une forme préférée de réalisation, car procurant la meilleure protection, tout en permettant simultanément de renforcer la robustesse de l'ensemble du collecteur et du dispositif de protection lorsque cet ensemble est déposé, le dispositif de protection tubulaire est télescopique sensiblement selon l'axe de rotation, ledit premier organe tubulaire pouvant s'engager télescopiquement dans ledit deuxième organe tubulaire, lors de déplacements axiaux du collecteur et du plateau de commande par rapport à l'ensemble mât-moyeu.

Avantageusement de plus, ce dispositif de protection comprend également un soufflet présentant une souplesse axiale sensiblement selon l'axe de rotation et enveloppant le premier organe tubulaire et au moins en partie le deuxième organe tubulaire, sur lequel ledit soufflet est retenu par l'une de ses extrémités axiales, tandis que son autre extrémité axiale est retenue sur le plateau de commande ou une partie d'extrémité du premier organe tubulaire qui est liée audit plateau de commande, de sorte à assurer une protection de l'intervalle entre les deux organes tubulaires.

En outre, des moyens de guidage supplémentaires en rotation peuvent être avantageusement ménagés entre les deux organes tubulaires dudit dispositif de protection, de sorte à constituer une butée en torsion, limitant les mouvements relatifs de rotation des deux organes tubulaires. De tels moyens de guidage supplémentaires permettent d'éviter d'endommager le soufflet après la dépose de l'ensemble du collecteur et du dispositif de protection.

Dans un mode préféré de réalisation, ces moyens de guidage supplémentaires en rotation comprennent au moins une bague anti-rotation, munie d'au moins un doigt radial, en saillie vers l'intérieur du deuxième organe tubulaire, et pouvant coulisser axialement dans une lumière ménagée dans le premier organe tubulaire, avec un jeu axial entre chaque doigt de la bague et la fenêtre correspondante, de sorte à éviter tout blocage de la commande de pas.

D'autres caractéristiques et avantages de l'invention ressortiront de la description donnée ci-dessous, à titre non limitatif, d'exemples de réalisation décrits en référence aux dessins annexés sur lesquels :
- la figure 1 représente schématiquement un rotor arrière d'hélicoptère, de type connu tel que décrit dans FR 2 764 578, équipé d'un premier exemple d'installation de transmission d'énergie et/ou de signal, avec une ligne tournante à tronçon souple et flexible pour chaque pale du rotor,
- la figure 2 est une vue schématique du rotor arrière d'hélicoptère du brevet français précité équipé d'un second exemple d'installation selon l'invention, avec une ligne tournante à tronçon souple de forme hélicoïdale se prolongeant, sur le moyeu, en plusieurs lignes tournantes raccordées chacune à une pale respective du rotor,
- la figure 3 est une vue partielle et en coupe axiale du rotor des figures 1 et 2, et correspond à la figure 3 du brevet FR 2 764 578,
- la figure 4 est une vue partielle en coupe axiale représentant le rotor de la figure 3 équipé d'un exemple d'installation de transmission d'énergie et/ou de signal selon l'invention, du type représenté sur la figure 2, et,
- la figure 5 est une coupe transversale selon V-V de la figure 4.

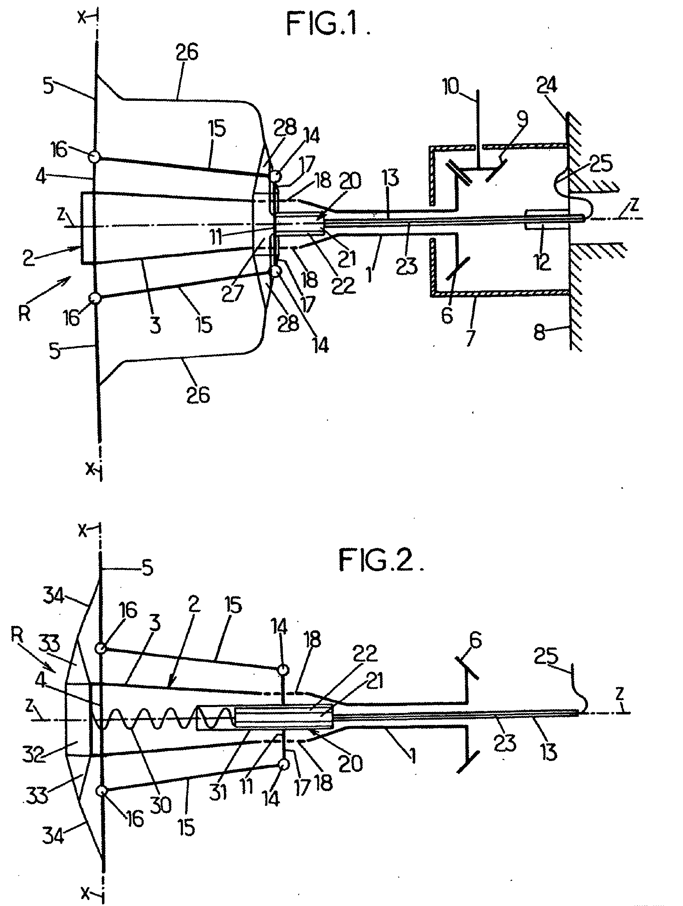

Le rotor arrière R d'hélicoptère schématiquement représenté sur la figure 1 comprend un mât tubulaire 1 prolongé axialement par une embase tubulaire 3 d'un moyeu 2 comportant également un plateau 4, sensiblement radial par rapport à l'axe Z-Z longitudinal du mât 1, qui constitue l'axe de rotation du rotor, et de l'ensemble mât 1-moyeu 2 coaxial autour de cet axe de rotation Z-Z.

Le rotor R comprend également au moins deux pales 5 à pas variable, dont chacune est reliée au plateau 4 du moyeu 2 par des moyens (non représentés) de retenue et d'articulation, autorisant des débattements angulaires de chaque pale 5 au moins en pas, autour d'un axe longitudinal de changement de pas X-X de la pale considérée, ces moyens de retenue et d'articulation, tels qu'une butée lamifiée sphérique d'une structure bien connue, permettant également au plateau 4 du moyeu 2 d'entraîner chaque pale 5 en rotation autour de l'axe Z-Z, lorsque l'ensemble mât 1-moyeu 2 est lui-même entraîné en rotation autour de cet axe, par un pignon conique de sortie 6, solidaire de la base du mât 1 (du côté opposé au moyeu 2), et appartenant à un couple conique, logé dans un carter 7 d'une boîte de transmission auxiliaire fixée à la structure 8 de l'hélicoptère, et dont le pignon conique d'entrée 9 est entraîné en rotation par un arbre de transmission arrière 10, selon une structure bien connue pour les rotors arrières d'hélicoptère.

Sur un tel rotor arrière R, on sait que le pas des pales 5 est commandé uniquement de façon collective. Un unique plateau de commande 11 est actionné en translation axiale (selon l'axe de rotation Z-Z) à l'intérieur d'une partie tubulaire de l'ensemble mât 1-moyeu 2, par exemple dans l'embase tubulaire 3 du moyeu 2, au moyen d'une servocommande dont l'actionneur 12, logé dans le carter 7 de la boîte de transmission auxiliaire 8, est prolongé par une tige de servocommande 13, qui est une tige centrale s'étendant coaxialement dans le mât 1 et jusque dans l'embase tubulaire 3. Le plateau de commande 11 est solidaire en translation axiale d'une extrémité de la tige 13 centrale non-tounante, et ce plateau 11 est simultanément solidaire en rotation du mât rotor 1 autour de l'axe de rotation Z-Z. L'autre partie d'extrémité de la tige centrale de commande 13 est reliée à l'actionneur de servocommande 12, qui est fixé sur le carter 7 de la boîte de transmission auxiliaire, laquelle entraîne en rotation le mât rotor 1, lequel entraîne lui-même en rotation le plateau de commande 11.

En conséquence, le plateau de commande 11 peut effectuer deux mouvements, l'un étant un déplacement axial (selon Z-Z) et l'autre étant un mouvement de rotation avec l'ensemble mât 1-moyeu 2, donc avec le rotor R.

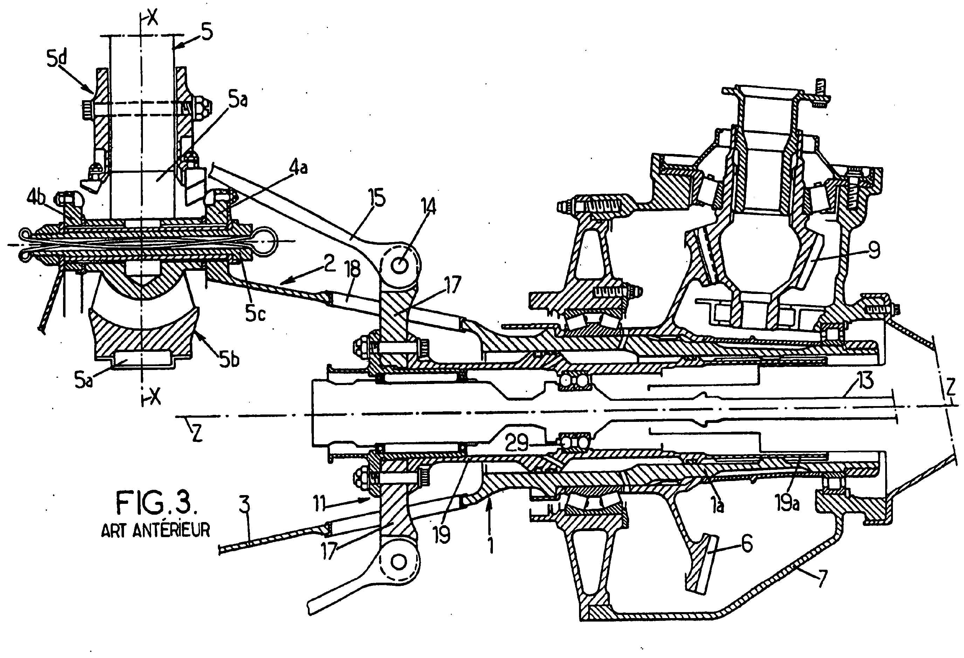

Ce double mouvement du plateau de commande 11 est rendu possible, par exemple comme décrit dans FR 2 764 578 (figure 3), grâce à un manchon monté dans l'ensemble tubulaire mât 1-moyeu 2, et auquel le plateau de commande 11 est fixé, ce manchon étant lui-même entraîné en rotation dans le mât 1 et guidé en translation axiale dans le mât 1 par des cannelures axiales externes de ce manchon, en prise avec des cannelures axiales internes du mât 1, le déplacement en translation du plateau de commande 11 par la tige centrale 13 axialement coulissante mais non-tournante étant généralement permis par une butée à billes, interposée dans cet exemple entre la tige centrale 13 et ledit manchon.

Sur le plateau de commande 11 sont articulées, par des moyens de liaison par exemple à rotule 14, les premières extrémités de biellettes de pas 15, en nombre égal aux pales 5, dont les autres extrémités sont articulées, également par des moyens de liaison, par exemple à rotule 16, chacune sur le levier de pas (non représenté) d'une pale 5 correspondante.

Dans l'exemple de la figure 1, comme dans FR 2 764 578, le plateau de commande 11, interne à l'embase tubulaire 3 du moyeu 2, se prolonge radialement vers l'extérieur par des bras de plateaux 17, qui traversent des ouvertures 18 ménagées dans l'embase 3, de sorte que les biellettes de pas, 15 et leurs articulations 14 sur les extrémités radiales externes des bras 17 sont à l'extérieur de l'embase 3.

Par ce dispositif de commande de pas, les pales 5 sont collectivement orientées autour de leur axe de changement de pas X-X, tout en étant entraînées en rotation autour de l'axe Z-Z par leurs liaisons au moyeu 2, ce dernier étant uniquement entraîné en rotation avec le mât 1 par les engrenages 6-9 placés dans la boîte de transmission auxiliaire 7.

Ce rotor R est équipé d'une installation de transmission d'énergie et/ou d'au moins un signal entre le rotor R et la structure 8 de l'hélicoptère. A titre d'exemple, on décrit une installation de transmission d'énergie électrique, par exemple pour l'alimentation de dispositifs dégivreurs et/ou antigivreurs équipant les pales 5, mais l'installation de transmission peut aussi être adaptée à d'autres types d'énergie, en particulier à fluide sous pression (installation pneumatique ou hydraulique).

L'installation de transmission comprend essentiellement un collecteur rotatif 20, qui est un collecteur électrique d'un type existant sur le marché et de faible diamètre, comportant une partie centrale fixe, ou statorique, 21, entourée d'une partie périphérique ou externe tournante ou rotorique 22, laquelle est, de manière bien connue, montée rotative coaxialement autour de la partie centrale statorique 21, et est équipée de pistes électriquement conductrices contre lesquelles viennent frotter des balais conducteurs portés par la partie centrale statorique 21. Ce collecteur 20 est positionné en extrémité de la tige 13 de commande de pas des pales 5 du rotor R, et la partie centrale statorique 21 du collecteur 20 est rendue solidaire en translation axiale de la tige 13. Par contre, la partie périphérique rotorique 22 est rendue solidaire en rotation du plateau de commande 11, le collecteur 20 étant monté coaxialement autour de l'axe de rotation Z-Z dans l'embase tubulaire 3.

L'énergie électrique est amenée au collecteur 20 par une première ligne de transmission 23, constituée d'un unique câble électrique regroupant un ensemble de conducteurs électriques, et cette ligne 23, connectée à la partie centrale statorique 21, s'étend sensiblement axialement à l'intérieur de la tige centrale 13, qui est tubulaire, et à l'intérieur de la servocommande 12, et se trouve raccordée à une ligne de transmission 24 fixée sur la structure 8 de l'hélicoptère par un tronçon souple 25, dont la déformation permet de compenser le déplacement axial relatif du collecteur 20 avec le plateau de commande 11 et la tige 13 par rapport à la structure 8 et à l'ensemble mât 1-moyeu 2. Le collecteur 20 transmet l'énergie électrique depuis la ligne de transmission 23 (câble) cheminant dans la tige 13 de servocommande vers plusieurs deuxièmes lignes de transmission 26, en nombre égal aux pales 5, et qui sont chacune raccordées à la partie périphérique rotorique 22 du collecteur 20, d'une part, et, d'autre part, à un conducteur intégré dans la pale 5 correspondante et appartenant à un dispositif dégivreur et/ou antigivreur de cette pale 5. Chaque ligne de transmission 26, constituée d'un conducteur électrique souple, est ainsi tournante avec la partie rotorique 22 du collecteur 20 et avec le plateau de commande 11, sur lequel chaque ligne de transmission 26 est de préférence retenue en au moins un point fixe, de façon à s'étendre par exemple le long du bras 17 correspondant, jusqu'à proximité de la liaison rotulée 14 correspondante, de sorte qu'entre ce point fixe et le raccordement à la pale 5 correspondante, cette deuxième ligne de transmission 26 présente un tronçon souple pouvant librement se déformer pour s'accommoder sans dommage des déplacements axiaux du collecteur 20 avec le plateau de commande 11 par rapport à l'ensemble mât 1-moyeu 2.

Chaque ligne de transmission tournante 26 présente ainsi un tronçon souple pouvant librement se déformer entre au moins un point fixe de liaison au rotor R, au niveau d'une pale 5 correspondante, et au moins un point fixe de liaison au plateau de commande 11, afin de soulager la connexion de cette ligne 26 à la partie rotorique 22 du collecteur 20 de toute traction préjudiciable.

En variante, la partie rotorique 22 du collecteur 20 peut transmettre l'énergie vers les pales 5 tout d'abord par un câble de sortie, rassemblant tous les conducteurs électriques 26 et fixé sur le plateau 11 en étant raccordé à une extrémité à la partie rotorique 22 du collecteur 20 et à son autre extrémité à un bornier 27, fixé sur le plateau 11, dans lequel le faisceau des conducteurs 26 est dégroupé, ou dans lequel le câble de sortie du collecteur 20 est raccordé par différentes bornes aux différents conducteurs électriques 26, dont chacun se raccorde au bornier 27, solidaire en rotation et translation du plateau 11, par un commutateur schématisé en 28 sur la figure 1, d'une part, et, d'autre part, à un connecteur sur la pale 5 correspondante. Le déplacement axial du collecteur 20 avec le plateau 11 et le bornier 27 par rapport au moyeu 2 est alors compensé par la flexion de chacun des conducteurs électriques 26 au cours de son cheminement entre la prise 28 à la sortie du bornier 27 et la prise placée sur la pale 5 correspondante.

Le rotor de la figure 2 étant très similaire à celui de la figure 1, dans sa structure comme dans son fonctionnement, il n'est pas à nouveau décrit et ses composants sont repérés par les mêmes références numériques que sur la figure 1.

La variante d'installation selon l'invention équipant le rotor de la figure 2 se distingue essentiellement de l'installation de transmission d'énergie et/ou de signal de la figure 1 par le fait que les lignes de transmission tournantes connectées à la partie externe rotorique 22 du collecteur 20 sont regroupées, entre cette partie rotorique 22 et le plateau 4 du moyeu 2, en un câble 30 de forme hélicoïdale enroulé sensiblement autour de l'axe de rotation Z-Z, de sorte à constituer un tronçon souple, pour compenser les déplacements axiaux relatifs entre l'ensemble mât 1-moyeu 2 et le collecteur 20, logé et protégé dans un tube de protection 31, de forme générale externe cylindrique, solidaire en translation axiale et en rotation du plateau de commande 11, à l'extérieur du tube 31, et également solidaire en translation axiale et en rotation de la partie externe rotorique 22 du collecteur 20, à l'intérieur de ce tube 31. La partie centrale statorique 21 du collecteur 20 reste, comme dans l'exemple précédent, solidaire en translation axiale de l'extrémité de la tige centrale 13 non-tournante et tubulaire, dans laquelle s'étend, comme dans l'exemple de la figure 1, la ligne de transmission non-tournante 23 agencée en câble regroupant plusieurs conducteurs électriques, comme déjà décrit en référence à la figure 1.

Le tube de protection 31 peut également protéger une partie, sensiblement rectiligne et/ou sensiblement hélicoïdale du câble hélicoïdal 30, dont l'extrémité du côté opposé au collecteur 20 est connectée, en un point fixe sur la partie centrale du plateau 4 du moyeu 2, par exemple à un bornier 32 fixé sur cette partie centrale du plateau 4, et dans lequel les différents conducteurs électriques du câble hélicoïdal 30 sont dégroupés, et chacun prolongé, par un connecteur de sortie 33 vers chacune des pales 5 par une ligne de transmission tournante 34 spécifique, qui se prolonge par ou se raccorde à un conducteur électrique d'un dispositif dégivreur et/ou antigivreur de la pale 5 correspondante.

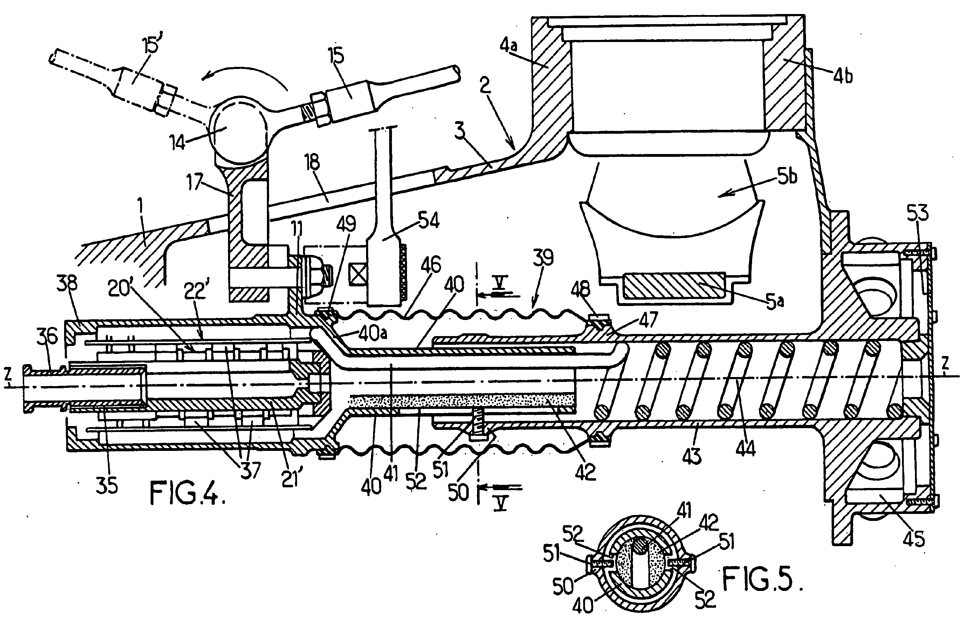

La figure 3, qui correspond à la figure 3 de FR 2 764 578, représente en coupe axiale un rotor arrière d'hélicoptère de l'état de la technique, du même type que celui des figures 1 et 2, mais sous une forme plus détaillée, et qui peut être équipé du mode de réalisation préféré de l'installation de transmission d'énergie et/ou de signal selon l'invention, avec la structure représentée sur la figure 4, sur laquelle la représentation du rotor est limitée à ce qui est nécessaire à la compréhension de l'invention.

Sur le rotor de la figure 3, on retrouve un mât tubulaire 1, entraîné en rotation autour de son axe longitudinal Z-Z, confondu avec l'axe de rotation du rotor, par sa base 1a en prise par des cannelures axiales externes avec des cannelures axiales internes du pignon de sortie 6 d'un renvoi d'angle à couple conique, dont le pignon d'entrée 9 est entraîné en rotation par un arbre de transmission (non représenté) relié à la boîte de transmission principale de l'hélicoptère, d'une manière bien connue, ce renvoi d'angle 6-9 et la base 1a du mât 1 étant logés dans le carter 7 de la boîte de transmission auxiliaire.

Du côté opposé à sa base 1a, le mât 1 est solidaire de l'embase tubulaire 3, de forme générale externe tronconique divergente, du moyeu 2, qui, dans cet exemple, est du type comportant deux plateaux de moyeu 4a et 4b, sensiblement parallèles l'un à l'autre et radiaux (perpendiculaires à l'axe Z-Z) et espacés axialement l'un de l'autre. En plan, les plateaux 4a et 4b ont sensiblement la même forme annulaire et sont coaxiaux autour de l'axe Z-Z, le plateau 4a, du côté du mât 1, étant appelé plateau interne, car situé du côté de la structure de la partie arrière de l'hélicoptère sur laquelle le rotor arrière est monté en rotation, et l'autre plateau 4b est le plateau externe.

Chacune des pales 5 du rotor est retenue par son pied 5a entre les plateaux 4a et 4b du moyeu 2 par un unique organe de retenue et d'articulation, qui est une butée lamifiée sphérique 5b, d'une structure bien connue, dont une armature est retenue entre les deux plateaux 4a et 4b par une broche de liaison boulonnée 5c.

Chaque pale 5 a son pas commandé à l'aide d'un manchon 5d entourant le pied de pale 5a et boulonné sur lui, et portant, en saillie vers l'avant du bord d'attaque de la pale 5, un levier de pas (non visible sur la figure 3) relié par une articulation à rotule à une extrémité d'une biellette de pas 15, dont l'autre extrémité est également reliée par une articulation à rotule 14 à l'extrémité radiale externe, par rapport à l'axe Z-Z, d'un bras 17 d'un plateau 11 de commande collective du pas des pales 5 du rotor. Chacun des bras 17 traverse l'une respectivement des fenêtres 18 ménagées dans l'embase tronconique 3 du moyeu 2.

Dans cette embase 3, le plateau de commande 11 et ses bras 17 sont entraînés en rotation avec le mât 1 et simultanément translatables selon l'axe Z-Z sur une course axiale correspondant à la plage de pas maximum, à laquelle les dimensions axiales des fenêtres 18 sont adaptées. Les déplacements axiaux du plateau 11 dans l'embase 3 sont commandés par la tige de commande 13, elle-même déplacée par un actionneur de servocommande en lacet, tel que 12 sur la figure 1, ou, en variante, une transmission mécanique avec renvoi d'angle (non représentée). La tige de commande 13 s'étend axialement à l'intérieur d'un manchon coulissant 19 fixé au plateau 11 et auquel la tige 13 transmet ses déplacements axiaux par une butée à billes 29, montée entre la tige 13 et le manchon coulissant 19, lequel est entraîné en rotation par le mât 1 et dans ce dernier par des cannelures axiales externes en prise avec des cannelures axiales internes du mât 1, permettant les déplacements axiaux du manchon coulissant 19 par rapport au mât 1.

Un rotor selon la figure 3 est avantageusement équipé d'une variante de l'installation de transmission d'énergie et/ou de signal selon l'invention décrite ci-dessus en référence à la figure 2, comme représenté sur la figure 4, sur laquelle les parties et composants correspondants du rotor sont repérés par les mêmes références numériques que sur la figure 3.

Dans l'installation de transmission d'énergie et/ou de signal partiellement représentée sur la figure 4, on retrouve un collecteur rotatif 20' comportant une partie centrale statorique 21', qui est tubulaire, et bloquée en rotation par des cannelures axiales internes 35 dans la partie d'extrémité axiale tournée du côté de la tige centrale (non représentée) telle que 13, et en prise avec des cannelures axiales externes de forme complémentaire sur un embout 36 tubulaire, destiné à être fixé à l'extrémité de la tige centrale de commande. Ainsi, l'embout de tige de commande 36 peut être traversé par une extrémité d'une ligne de transmission non-tournante (non représentée) telle que 23 (figures 1 et 2), qui pénètre par l'intérieur dans la partie centrale statorique 21' tubulaire du collecteur 20', et lui est connectée pour assurer l'alimentation électrique de balais 37 radialement en saillie vers l'extérieur de la partie centrale statorique 21' et en contact frottant avec des pistes conductrices ménagées en regard sur la face interne de la partie externe rotorique 22' du collecteur 20'. Cette partie externe rotorique 22' est logée et protégée dans un manchon 38 solidaire, par son extrémité axiale du côté opposé à l'embout de tige 36, du plateau de commande 11 qui est annulaire, et le manchon 38 est coaxial au plateau de commande 11 et reçoit le collecteur 20' de sorte que les parties centrale statorique 21' et externe rotorique 22' soient, comme le manchon 38 et le plateau de commande 11, coaxiaux autour de l'axe de rotation Z-Z.

Axialement du côté opposé au manchon 38, la partie centrale du plateau de commande 11 se prolonge vers le plateau externe 4b du moyeu 2 par un premier organe cylindro-conique et tubulaire 40 d'un dispositif de protection 39. Dans ce premier organe tubulaire 40, qui se rattache au plateau de commande 11 par un court tronçon d'extrémité tronconique 40a, est retenu un tronçon sensiblement rectiligne 41 d'une ligne de transmission tournante connectée, à une extrémité de ce tronçon 41, à la partie externe rotorique 22' du collecteur 20', et ce tronçon 41 est maintenu contre la périphérie interne de l'organe tubulaire 40 par de la résine 42, comme représenté sur la figure 5, afin de préserver un évidement central sur toute la longueur de l'organe tubulaire 40. A la sortie de l'organe tubulaire 40, à son extrémité du côté opposé au collecteur 20', le tronçon 41 de la ligne de transmission tournante, agencé en câble regroupant des conducteurs électriques, pénètre à l'intérieur d'un deuxième organe de protection tubulaire 43, qui est solidaire, par une extrémité axiale, de la partie centrale tubulaire et coaxiale autour de l'axe de rotation Z-Z du plateau externe 4b du moyeu 2. A l'intérieur de ce deuxième organe tubulaire 43, le premier tronçon 41 du câble de sortie du collecteur 20' se prolonge par un deuxième tronçon 44 de forme hélicoïdale, autour de l'axe Z-Z. Ce tronçon hélicoïdal 44 de la ligne de transmission tournante, ou câble de sortie du collecteur 20', est fixé par une extrémité dans un carter 45, qui est annulaire et lui-même fixé sur la partie centrale annulaire du plateau externe 4b du moyeu 2. Ce carter 45 peut constituer un carter d'un bornier de dégroupement du faisceau des conducteurs électriques regroupés dans le câble 41-44, ou, en variante, ce carter 45 peut envelopper des raccordements des conducteurs issus du tronçon hélicoïdal 44 à d'autres conducteurs (non représentés) assurant la liaison avec des conducteurs électriques intégrés dans les pales, ou se prolongeant par des tels conducteurs intégrés.

Dans ce dispositif de protection 39, on constate que le deuxième organe tubulaire 43 est animé uniquement d'un mouvement de rotation solidaire avec le moyeu 2 du rotor, alors que le premier organe tubulaire 40, solidaire du plateau de commande 11, est donc animé à la fois d'un mouvement de rotation et d'un mouvement de déplacement axial, comme le plateau de commande 11. Entre les deux organes tubulaires 40 et 43 du dispositif de protection 39, il se produit donc uniquement un mouvement de déplacement relatif axial, lorsque le collecteur 20' est translaté axialement avec le plateau de commande 11 par des translations de la tige centrale de commande (non représentée). La forme hélicoïdale donnée au tronçon 44 de la ligne de transmission tournante permet à cette ligne de compenser le déplacement relatif axial entre les deux organes tubulaires 40 et 43 protégeant les tronçons 41 et 44 de cette ligne de transmission. Bien évidemment, pour éviter toute interférence entre ces deux organes tubulaires 40 et 43, un intervalle ou espacement est maintenu entre eux, et peut être axial et/ou radial. En effet, une interférence entre ces deux organes tubulaires 40 et 43 pourrait créer un blocage de la commande de pas, en s'opposant aux translations axiales du plateau de commande 11 avec le collecteur 20', ce qui entraînerait une perte de la commande en lacet de l'hélicoptère, pouvant provoquer la perte de l'hélicoptère.

De préférence, comme représenté sur les figures 4 et 5, le dispositif de protection 39 est télescopique, le premier organe tubulaire 40 étant engagé, avec un jeu radial de l'ordre de 1 mm, à l'intérieur du deuxième organe tubulaire 43, de sorte que l'organe tubulaire 40 puisse effectuer la course axiale maximale correspondant à la plage de pas maximal, avec le plateau 11 et le collecteur 20', sans que son tronçon d'extrémité tronconique 40a vienne en butée contre l'extrémité libre du deuxième organe tubulaire 43.

Afin d'assurer l'étanchéité de l'intervalle entre les deux organes tubulaires 40 et 43, contre l'entrée dans cet intervalle de particules et débris provenant de l'extérieur et pénétrant dans l'embase tubulaire 3, par exemple en passant par les ouvertures ou fenêtres latérales 18, le dispositif de protection 39 comprend également un soufflet 46, présentant une grande souplesse axiale afin de ne pas gêner les déplacements du plateau de commande 11 avec le collecteur 20' et le premier organe tubulaire 40 par rapport au deuxième organe tubulaire 43, et donc afin de ne pas gêner les déplacements axiaux de la servocommande. De préférence, ce soufflet 46 est réalisé en un matériau métallique formé à chaud, afin de résister aux agressions extérieures (pluie, sable,...) et pour apporter à l'ensemble constitué du collecteur 20' et du dispositif de protection 39 une bonne raideur en flexion. Cette caractéristique permet de renforcer la robustesse de cet ensemble, lorsqu'il est déposé, car une sollicitation inopportune en flexion pourrait en effet endommager les deux organes tubulaires 40 et 43, dans leur partie en chevauchement (correspondant à la portion de l'organe tubulaire 40 engagée dans la portion en regard de l'organe tubulaire 43). Le soufflet 46, qui entoure l'organe tubulaire 40 et partiellement l'organe tubulaire 43, peut être fixé sur ces organes tubulaires 40 et 43 par des moyens de liaison de préférence amovibles. A une extrémité, le soufflet 46 est fixé sur un bossage périphérique 47 en saillie vers l'extérieur du deuxième organe tubulaire 43, tandis qu'à l'autre extrémité, le soufflet 46 est fixé sur la périphérie de la partie centrale annulaire du plateau de commande 11, partie centrale annulaire à laquelle se raccorde le tronçon tronconique 40a de l'organe tubulaire 40. La fixation amovible des deux extrémités du soufflet 46 peut être assurée par des colliers de serrage tels que 48 et 49, ou encore des vis de fixation radiales, vissées respectivement dans le bossage 47 de l'organe tubulaire 43 ou dans la partie centrale annulaire du plateau 11, ou par tout autre moyen de fixation mécanique équivalent. En variante, les liaisons du soufflet 46 à ses deux extrémités axiales peuvent être non amovibles, l'assemblage étant alors assuré par montage serré, collage, soudage ou tout autre moyen de fixation équivalent.

Comme représenté sur les figures 4 et 5, des organes de guidage supplémentaire en rotation sont montés entre les deux organes tubulaires 40 et 43, afin d'assurer leur rotation simultanée autour de l'axe Z-Z. Ces organes constituent une butée en torsion, destinée à éviter tout endommagement du soufflet 46, après dépose de l'ensemble du collecteur 20' et du dispositif de protection 39. Ces organes comprennent une bague anti-rotation 50, constituée par un deuxième bossage périphérique en saillie vers l'extérieur et autour de l'organe tubulaire 43, dans sa portion située entre le premier bossage périphérique 47 et son extrémité libre dirigée vers le tronçon d'extrémité tronconique 40a du premier organe tubulaire 40. Cette bague anti-rotation 50 est équipée, dans cet exemple, de deux doigts radiaux 51 (voir figure 5), diamétralement opposés et chacun en saillie radialement vers l'intérieur du deuxième organe tubulaire 43, de sorte que leur extrémité radiale interne pénètre dans l'une respectivement de deux lumières axiales 52 ménagées dans des parties diamétralement opposées du premier organe tubulaire 40, et dont la dimension axiale est suffisamment importante pour empêcher toute venue en butée des doigts 51 avec l'une ou l'autre des extrémités axiales des lumières 52, afin de ne pas gêner la servocommande de pas. Le coulissement des doigts 51 dans les lumières 52, avec le jeu axial important requis, garantit que la fonction de butée en torsion sera remplie pour toute position de la servocommande, les doigts 51 pouvant cependant être dimensionnés pour remplir, en plus de leur fonction de guidage, une fonction de pions fusibles, qui se rompent en cas de couple excessif en torsion différentielle.

Pour faciliter les actions de maintenance, un outil spécifique est prévu pour extraire l'ensemble du collecteur 20' et son dispositif de protection 39, après avoir désaccouplé les biellettes de pas 15 des pales 5 puis basculé les biellettes de pas comme représenté en traits interrompus sur la figure 4, et avoir ensuite, à l'aide d'une clé à pipe 54, dévissé les boulons de fixation des bras 17 sur le plateau de commande 11, et après avoir également désolidarisé le carter 45 de la partie centrale annulaire du plateau externe 4b du moyeu 2. Cet outil spécifique d'extraction de l'ensemble du collecteur 20' et du dispositif de protection 39 peut être engagé dans le moyeu 2 après retrait du couvercle 53 fermant, sur !e carter 45, l'extrémité du canal central s'étendant dans les organes tubulaires 40 et 43 jusqu'à la partie centrale statorique 21' du collecteur 20', et cet outil passe au milieu du tronçon 44 hélicoïdal de la ligne de transmission, puis au milieu de l'organe tubulaire 40 et vient s'accrocher à un moyen de fixation approprié placé à l'extrémité de l'embout 36 de tige de commande de pas ou de la partie centrale statorique 21' du collecteur 20'. Cet outil réalise ainsi une tenue mécanique entre le collecteur 20' et l'extrémité fixée sur le moyeu 2, c'est-à-dire le carter 45, qui reste fixé à l'organe tubulaire 43, mais peut être désolidarisé de la partie centrale annulaire du plateau externe 4b du moyeu 2.

Ainsi, l'ensemble du collecteur 20' et du dispositif de protection 39 avec la partie centrale annulaire du plateau de commande 11 peut être retiré axialement du moyeu 2.

Au montage, il est possible de faire tourner la partie centrale statorique 21' du collecteur 20' grâce à cet outillage, afin de positionner correctement les cannelures 35 par rapport aux cannelures complémentaires de l'embout de tige 36, qui servent de moyens de retenue en rotation de la partie centrale statorique 21' du collecteur 20', par rapport à la tige de servocommande.

En outre, l'outillage de maintenance donne à ce même ensemble 20'-39 une grande rigidité axiale, en flexion et en torsion, ce qui permet de manipuler l'ensemble collecteur 20'-dispositif de protection 39 sans mise en contrainte ni des tronçons internes 41 et 44 de la ligne de transmission tournante, ni du soufflet de protection 46, ni des organes tubulaires de protection 40 et 43, ni des doigts 51 coulissant dans les lumières 52.

Grâce à l'architecture de l'installation et à cet outillage spécifique, il n'est plus nécessaire de démonter l'ensemble du mât 1 et du moyeu 2 du rotor pour réaliser les interventions de maintenance. Cette opération de démontage est réalisable en une heure environ par une seule personne.

A ce propos, il est à noter que, lors du démontage de l'ensemble collecteur 20',il est généralement nécessaire de désassembler une prise électrique placée à l'extérieur de la servocommande, si le diamètre de la tige centrale telle que 13 est insuffisant. Ceci permet à la ligne de transmission non-tournante seule de passer à l'intérieur de la servocommande telle que 12 et la tige centrale de commande telle que 13.

Les avantages de l'installation de transmission d'énergie et/ou de signaux selon l'invention sont nombreux et importants.

Tout d'abord, le faible diamètre du collecteur 20 ou 20' a pour effet de réduire la vitesse tangentielle ou linéaire des balais tels que 37 sur les pistes en regard, de sorte que la durée de vie du collecteur 20 ou 20' est augmentée.

La présence du soufflet de protection 46 entre les deux organes tubulaires 40 et 43, et autour de ces deux organes de protection des tronçons 41 et 44 de la ligne de transmission tournante permet aussi de protéger le collecteur 20' des agents extérieurs (pluie, sable, brouillard salin, graisse, coups d'outils,...). Le dispositif de protection 39 avec son soufflet 46 constitue un deuxième moyen d'augmentation de la durée de vie du collecteur 20'.

Par l'intermédiaire de l'outillage de dépose passant au travers de l'ensemble du collecteur 20' et du dispositif de protection 39, il n'est plus nécessaire de déposer le moyeu rotor et de démonter partiellement la boîte de transmission auxiliaire. Un accès direct pour le démontage et le remontage du dispositif est possible sur l'hélicoptère.

L'amélioration de la durée de vie, pour les deux raisons précitées, et l'allègement des opérations de maintenance, pour la raison qui vient d'être mentionnée ci-dessus, permettent d'améliorer le coût global de maintenance, qui est un paramètre de plus en plus important pour les opérateurs d'hélicoptères.

Enfin, la réduction de volume du collecteur 20 ou 20', par rapport à ceux de l'état de la technique, permet aussi de réduire la masse du dispositif d'environ 30% par rapport à un dispositif de l'état de la technique. Cet avantage reste vrai par rapport à la réalisation proposée dans FR 2 751 794, qui comporte un second étage agencé en collecteur linéaire, alors que la présente invention utilise simplement un tronçon de ligne de transmission tournante présentant une forme hélicoïdale dans un simple organe tubulaire.

## Revendications

1. Rotor, notamment un rotor arrière d'hélicoptère, équipé d'une installation de transmission d'énergie et/ou d'au moins un signal entre le rotor (R) et la structure (8) d'un giravion, comprenant:
- un ensemble mât (1)-moyeu (2) au moins en partie tubulaire, coaxial autour d'un axe longitudinal (Z-Z) du mât (1), et destiné à être entraîné en rotation autour dudit axe (Z-Z), qui est l'axe de rotation du rotor (R), par rapport à la structure (8) du giravion, et,
- au moins deux pales (5) à pas variable, dont chacune est reliée au moyeu (2) et destinée à être entraînée par ledit moyeu (2) en rotation autour dudit axe (Z-Z) de rotation et est susceptible de débattements angulaires au moins en pas, autour d'un axe (X-X) de changement de pas de la pale (5) correspondante, lesdits débattements angulaires en pas étant commandés par déplacement axial, parallèlement à l'axe de rotation (Z-Z), d'un plateau (11) de commande de pas, relié à chaque pale (5) par une biellette de pas (15), et solidaire en rotation dudit ensemble mât (1)-moyeu (2), ledit plateau (11) de commande étant entraîné en translation axiale par rapport audit ensemble mât (1)-moyeu (2) par une tige (13) centrale et non-tournante de commande de pas, s'étendant et coulissant sensiblement axialement dans une partie tubulaire (3) de l'ensemble mât (1)-moyeu (2), et dont les coulissements axiaux dans ladite partie tubulaire (3) sont commandables par au moins un actionneur (12) de commande pilote fixé à ladite structure (8), l'installation étant **caractérisée en ce qu'**elle comprend au moins un collecteur (20) rotatif, monté dans ladite partie tubulaire (3) dudit ensemble mât (1)-moyeu (2), et coaxial autour dudit axe de rotation (Z-Z), et dont une partie centrale statorique (21) est solidaire en translation axiale de ladite tige (13) centrale coulissante, et autour de laquelle est montée tournante une partie périphérique rotorique (22), solidaire en rotation dudit plateau (11) de commande et solidaire en translation de ladite partie centrale statorique (21), au moins une ligne de transmission (23) non-tournante étant adaptée à relier ladite partie centrale statorique (21) à la structure (8) du giravion dont au moins un tronçon s'étend sensiblement le long d'au moins une portion de ladite tige centrale (13), ladite partie périphérique rotorique (22) étant reliée audit rotor (R) par au moins une ligne de transmission tournante (26, 30) liée en au moins un point audit rotor (R).

2. Rotor selon la revendication 1,
**caractérisée en ce que** ladite au moins une ligne non-tournante (23) et ladite au moins une ligne tournante (26, 30) comportent chacune au moins un conducteur électrique, et ledit au moins un collecteur rotatif (20) est un collecteur électrique.

3. Rotor selon la revendication 1,
**caractérisée en ce que** ladite au moins une ligne non-tournante (23) et ladite au moins une ligne tournante (26, 30) comportent chacune au moins une conduite de fluide sous pression, et ledit au moins un collecteur rotatif (20) est un collecteur de fluide sous pression, en particulier hydraulique ou pneumatique.

4. Rotor selon l'une quelconque des revendications 1 à 3, **caractérisée en ce qu'**au moins un tronçon de ladite ligne non-tournante (23) s'étend dans au moins une portion tubulaire de ladite tige centrale (13).

5. Rotor selon l'une quelconque des revendications 1 à 4,
**caractérisée en ce que** ladite au moins une ligne non-tournante (23) comporte au moins un tronçon souple (25), destiné à se déformer pour s'accommoder sans dommage des déplacements axiaux dudit collecteur (20) et de ladite tige centrale (13) par rapport à ladite structure (8) du giravion, et ladite au moins une ligne tournante (26 ; 30, 34) comporte au moins un tronçon souple (26, 30), destiné à se déformer pour s'accommoder sans dommage des déplacements axiaux dudit collecteur (20) par rapport audit ensemble mât (1)-moyeu (2).

6. Rotor selon la revendication 5,
**caractérisée en ce qu'**il comprend au moins une ligne tournante (26) reliant ladite partie rotorique (22) du collecteur (20) à l'une respectivement des pales (5) et comportant au moins un tronçon souple (26), se déformant en flexion entre un point de liaison de ladite ligne tournante (26) à ladite partie rotorique (22) du collecteur (20) et un point de fixation de ladite ligne tournante (26) sur ladite pale (5) ou un organe solidaire en rotation de ladite pale (5).

7. Rotor selon la revendication 5,
**caractérisée en ce qu'**il comprend au moins une ligne tournante (30-34) comportant au moins un tronçon souple (30) sensiblement hélicoïdal autour de l'axe de rotation (Z-Z), pour compenser les déplacements axiaux relatifs entre le collecteur (20) et l'ensemble mât (1)-moyeu (2), et s'étendant entre la partie rotorique (22) du collecteur (20) et un point fixe d'une partie centrale du moyeu (2), d'où ladite ligne tournante peut être prolongée (34) vers l'une au moins des pales (5) du rotor (R).

8. Rotor selon la revendication 7,
**caractérisée en ce que** ladite ligne tournante avec son tronçon (30, 44) souple hélicoïdal est au moins en partie logée dans un dispositif de protection tubulaire (39), sensiblement coaxial autour de l'axe de rotation (Z-Z), et comportant un premier organe tubulaire (40), solidaire en translation axiale et en rotation dudit plateau (11) de commande, et dans lequel est logé un premier tronçon (41) de ladite ligne tournante qui est adjacent à la partie rotorique (22, 22') dudit collecteur (20, 20').

9. Rotor selon la revendication 8,
**caractérisée en ce que** ledit premier tronçon (41) de la ligne tournante est maintenu excentré à la périphérie interne dudit premier organe tubulaire (40), lequel est solidaire d'une partie centrale annulaire du plateau (11} de commande.

10. Rotor selon l'une quelconque des revendications 8 et 9,
**caractérisée en ce que** ledit dispositif de protection tubulaire (39) comprend également un deuxième organe tubulaire (43), solidaire du moyeu (2), et dans lequel est logé le tronçon souple hélicoïdal (44) de la ligne tournante.

11. Rotor selon la revendication 10,
**caractérisée en ce qu'**un espacement axial et/ou radial est maintenu entre les deux organes tubulaires (40, 43), de sorte à éviter toute interférence lors de leurs déplacements axiaux relatifs.

12. Rotor selon l'une quelconque des revendications 10 et 11,
**caractérisée en ce que** ledit dispositif de protection tubulaire (39) est télescopique sensiblement selon l'axe de rotation (Z-Z), ledit premier organe tubulaire (40) pouvant s'engager télescopiquement dans ledit deuxième organe tubulaire (43), lors de déplacements axiaux du collecteur (20') et du plateau (11) de commande par rapport à l'ensemble mât (1)-moyeu (2).

13. Rotor selon l'une quelconque des revendications 10 à 12,
**caractérisée en ce que** le dispositif de protection (39) comprend également un soufflet (46) présentant une souplesse axiale sensiblement selon l'axe de rotation (Z-Z) et enveloppant le premier organe tubulaire (40) et au moins en partie le deuxième organe tubulaire (43), sur lequel ledit soufflet (46) est retenu par l'une de ses extrémités axiales, tandis que son autre extrémité axiale est retenue sur le plateau de commande (11) ou une partie d'extrémité du premier organe tubulaire (40) qui est liée audit plateau de commande (11), de sorte à assurer une protection de l'intervalle entre les deux organes tubulaires (40,43).

14. Rotor selon la revendication 12,
**caractérisée en ce que** des moyens de guidage supplémentaires (50, 51, 52) en rotation sont ménagés entre les deux organes tubulaires (40, 43) dudit dispositif de protection (39), de sorte à constituer une butée en torsion, limitant les mouvements relatifs de rotation des deux organes tubulaires (40, 43).

15. Rotor selon la revendication 14,
**caractérisée en ce que** lesdits moyens de guidage supplémentaire en rotation comprennent au moins une bague anti-rotation (50), munie d'au moins un doigt radial (51), en saillie vers l'intérieur du deuxième organe tubulaire (43), et pouvant coulisser axialement dans une lumière (52) ménagée dans le premier organe tubulaire (40), avec un jeu axial entre chaque doigt (51) de la bague (50) et la fenêtre (52) correspondante, de sorte à éviter tout blocage de la commande de pas.

## Claims

1. A rotor, in particular a rear helicopter rotor equipped with an installation for transmitting energy and/or at least one signal between the rotor (R) and the structure (8) of a rotorcraft, comprising:
- a mast (1)/hub (2) assembly which is tubular at least in part, which is coaxial about a longitudinal axis (Z-Z) of the mast (1), and intended to be driven in rotation about said axis (Z-Z), which is the axis of rotation of the rotor (R), relative to the structure (8) of the rotorcraft, and
- at least two variable-pitch blades (5), each of which is connected to the hub (2) and intended to be driven by said hub (2) in rotation about said axis (Z-Z) of rotation and is capable of angular deflections at least in pitch, about a feathering axis (X-X) of the corresponding blade (5), said angular deflections in pitch being controlled by axial displacement, parallel to the axis of rotation (Z-Z), of a swashplate (11), connected to each blade (5) by a pitch change rod (15), and integral in rotation with said mast (1)/hub (2) assembly, said swashplate (11) being driven in axial translation relative to said mast (1)/hub (2) assembly by a central, non-rotating pitch control rod (13), extending and sliding substantially axially within a tubular part (3) of the mast (1)/hub (2) assembly, and the axial sliding movements of which in said tubular part (3) are controllable by at least one pilot control actuator (12) fixed to said structure (8), the installation being **characterised in that** it comprises at least one rotary collector (20), mounted in said tubular part (3) of said mast (1)/hub (2) assembly, and coaxial about said axis of rotation (Z-Z), and a stator central part (21) of which is integral in axial translation with said sliding central rod (13), and around which is mounted to rotate a rotor peripheral part (22), integral in rotation with said swashplate (11) and integral in translation with said stator central part (21), at least one non-rotating transmission line (23) being suitable for connecting said stator central part (21) to the structure (8) of the rotorcraft, at least one section of which extends substantially along at least one portion of said central rod (13), said rotor peripheral part (22) being connected to said rotor (R) by at least one rotating transmission line (26, 30) linked at at least one point to said rotor (R).

2. A rotor according to Claim 1, **characterised in that** said at least one non-rotating line (23) and said at least one rotating line (26, 30) each comprise at least one electrical conductor, and said at least one rotary collector (20) is an electrical collector.

3. A rotor according to Claim 1, **characterised in that** said at least one non-rotating line (23) and said at least one rotating line (26, 30) each comprise at least one pressurised fluid duct, and said at least one rotary collector (20) is a pressurised fluid collector, in particular a hydraulic or pneumatic one.

4. A rotor according to any one of Claims 1 to 3, **characterised in that** at least one section of said non-rotating line (23) extends in at least one tubular portion of said central rod (13).

5. A rotor according to any one of Claims 1 to 4, **characterised in that** said at least one non-rotating line (23) comprises at least one flexible section (25), intended to be deformed to accommodate without damage the axial displacements of said collector (20) and of said central rod (13) relative to said structure (8) of the rotorcraft, and said at least one rotating line (26 ; 30, 34) comprises at least one flexible section (26, 30), intended to be deformed to accommodate without damage the axial displacements of said collector (20) relative to said mast (1)/hub (2) assembly.

6. A rotor according to Claim 5, **characterised in that** it comprises at least one rotating line (26) connecting said rotor part (22) of the collector (20) to one respectively of the blades (5) and comprising at least one flexible section (26), which is deformed in flexion between a point connecting said rotating line (26) to said rotor part (22) of the collector (20) and a point for fastening said rotating line (26) to said blade (5) or an element integral in rotation with said blade (5).

7. A rotor according to Claim 5, **characterised in that** it comprises at least one rotating line (30-34) comprising at least one flexible section (30) which is substantially helical about the axis of rotation (Z-Z), in order to compensate for the relative axial displacements between the collector (20) and the mast (1)/hub (2) assembly, and extending between the rotor part (22) of the collector (20) and a fixed point of a central part of the hub (2), from which said rotating line may be extended (34) towards one at least of the blades (5) of the rotor (R).

8. A rotor according to Claim 7, **characterised in that** said rotating line with its helical flexible section (30, 44) is at least in part housed in a tubular protective device (39), which is substantially coaxial about the axis of rotation (Z-Z), and comprises a first tubular element (40), integral in axial translation and in rotation with said swashplate (11), and in which is housed a first section (41) of said rotating line which is adjacent to the rotor part (22, 22') of said collector (20, 20').

9. A rotor according to Claim 8, **characterised in that** said first section (41) of the rotating line is held eccentrically to the internal periphery of the first tubular element (40), which is integral with an annular central part of the swashplate (11).

10. A rotor according to any one of Claims 8 and 9, **characterised in that** said tubular protective device (39) also comprises a second tubular element (43), integral with the hub (2), and in which is lodged the helical flexible section (44) of the rotating line.

11. A rotor according to Claim 10, **characterised in that** an axial and/or radial spacing is maintained between the two tubular elements (40, 43), so as to avoid any interference upon the relative axial displacements thereof.

12. A rotor according to any one of Claims 10 and 11, **characterised in that** said tubular protective device (39) is telescopic substantially along the axis of rotation (Z-Z), said first tubular element (40) being able to engage telescopically in said second tubular element (43), upon axial displacements of the collector (20') and of the swashplate (11) relative to the mast (1)/hub (2) assembly.

13. A rotor according to any one of Claims 10 to 12, **characterised in that** the protective device (39) also comprises a bellows (46) having axial flexibility substantially along the axis of rotation (Z-Z) and surrounding the first tubular element (40) and at least in part the second tubular element (43), on which said bellows (46) is held by one of its axial ends, whereas its other axial end is held on the swashplate (11) or an end part of the first tubular element (40) which is connected to said swashplate (11), so as to ensure protection of the gap between the two tubular elements (40, 43).

14. A rotor according to Claim 12, **characterised in that** additional means (50, 51, 52) for guidance in rotation are formed between the two tubular elements (40, 43) of said protective device (39), so as to constitute a torsion stop, limiting the relative movements of rotation of the two tubular elements (40, 43).

15. A rotor according to Claim 14, **characterised in that** said additional means for guidance in rotation comprise at least one anti-rotation ring (50), provided with at least one radial finger (51), protruding towards the inside of the second tubular element (43), and being able to slide axially in a port (52) formed in the first tubular element (40), with axial play between each finger (51) of the ring (50) and the corresponding window (52), so as to avoid any blocking of the pitch control.

## Patentansprüche

1. Rotor, insbesondere Hubschrauber-Heckrotor, der mit einer Einrichtung zur Übertragung von Energie und/oder von mindestens einem Signal zwischen dem Rotor (R) und der Struktur (8) eines Drehflüglers ausgestattet ist, mit:
- einer zumindest teilweise rohrförmigen Einheit aus Mast (1) und Nabe (2), die um eine Längsachse (Z-Z) des Masts (1) koaxial und dazu bestimmt ist, um die Achse (Z-Z), die die Drehachse des Rotors (R) ist, bezüglich der Struktur (8) des Drehflüglers in Drehung versetzt zu werden, und
- mindestens zwei Rotorblättern (5) mit variabler Blattverstellung, von denen jedes mit der Nabe (2) verbunden und dazu bestimmt ist, von der Nabe (2) um die Drehachse (Z-Z) in Drehung versetzt zu werden, und Ausschläge zumindest der Blattverstellung um eine Blattverstellungs-Änderungsachse (X-X) des entsprechenden Blatts (5) erfahren kann, wobei die Blattverstellungsausschläge durch axiale Verschiebung einer Blattverstellungs-Steuerspinne (11) parallel zur Drehachse (Z-Z) gesteuert werden, die mit jedem Blatt (5) über eine Blattverstellstoßstange (15) verbunden und mit der Einheit aus Mast (1) und Nabe (2) drehfest verbunden ist, wobei die Steuerspinne (11) durch eine zentrale und nicht-drehende Blattverstellsteuerstange (13) bezüglich der Einheit aus Mast (1) und Nabe (2) in axialer Translationsverschiebung angetrieben wird, die sich im Wesentlichen axial in einem rohrförmigen Teil (3) der Einheit aus Mast (1) und Nabe (2) erstreckt und gleitet, und deren axiale Gleitbewegungen im rohrförmigen Teil (3) von mindestens einem Pilotsteuerungs-Stellantrieb (12) steuerbar sind, der an der Struktur (8) befestigt ist,
wobei die Einrichtung **dadurch gekennzeichnet ist, dass** sie mindestens einen Drehkollektor (20), der in den rohrförmigen Teil (3) der Einheit aus Mast (1) und Nabe (2) montiert und um die Drehachse (Z-Z) koaxial ist und von dem ein zentraler Statorteil (21) in axialer Translationsverschiebung fest mit der gleitenden zentralen Stange (13) verbunden ist, und um den ein peripherer Rotorteil (22) drehend montiert ist, der drehfest mit der Steuerspinne (11) und in Translationsverschiebung fest mit dem zentralen Statorteil (21) verbunden ist, mindestens eine nicht-drehende Übertragungsleitung (23) aufweist, die geeignet ist, um den zentralen Statorteil (21) mit der Struktur (8) des Drehflüglers zu verbinden, von der mindestens ein Abschnitt sich im Wesentlichen entlang mindestens eines Teilabschnitts der zentralen Stange (13) erstreckt, wobei der periphere Rotorteil (22) mit dem Rotor (R) über mindestens eine drehende Übertragungsleitung (26, 30) verbunden ist, die an mindestens einem Punkt mit dem Rotor (R) verbunden ist.

2. Rotor nach Anspruch 1, **dadurch gekennzeichnet, dass** die mindestens eine nicht-drehende Leitung (23) und die mindestens eine drehende Leitung (26, 30) je mindestens einen elektrischen Leiter aufweisen, und der mindestens eine Drehkollektor (20) ein elektrischer Kollektor ist.

3. Rotor nach Anspruch 1, **dadurch gekennzeichnet, dass** die mindestens eine nicht-drehende Leitung (23) und die mindestens eine drehende Leitung (26, 30) je mindestens eine Druckfluidrohrleitung aufweisen, und der mindestens eine Drehkollektor (20) ein Kollektor eines insbesondere hydraulischen oder pneumatischen Druckfluids ist.

4. Rotor nach einem der Ansprüche 1 bis 3, **dadurch gekennzeichnet, dass** mindestens ein Abschnitt der nicht-drehenden Leitung (23) sich in mindestens einem rohrförmigen Teilabschnitt der zentralen Stange (13) erstreckt.

5. Rotor nach einem der Ansprüche 1 bis 4, **dadurch gekennzeichnet, dass** die mindestens eine nicht-drehende Leitung (23) mindestens einen flexiblen Abschnitt (25) aufweist, der dazu bestimmt ist, sich zu verformen, um sich ohne Beschädigung an die axialen Verschiebungen des Kollektors (20) und der zentralen Stange (13) bezüglich der Struktur (8) des Drehflüglers anzupassen, und die mindestens eine drehende Leitung (26; 30, 34) mindestens einen flexiblen Abschnitt (26, 30) aufweist, der dazu bestimmt ist, sich zu verformen, um sich ohne Beschädigung an die axialen Verschiebungen des Kollektors (20) bezüglich der Einheit aus Mast (1) und Nabe (2) anzupassen.

6. Rotor nach Anspruch 5, **dadurch gekennzeichnet, dass** er mindestens eine drehende Leitung (26) aufweist, die den Rotorteil (22) des Kollektors (20) mit je einem der Blätter (5) verbindet und mindestens einen flexiblen Abschnitt (26) aufweist, der sich zwischen einem Verbindungspunkt der drehenden Leitung (26) mit dem Rotorteil (22) des Kollektors (20) und einem Befestigungspunkt der drehenden Leitung (26) am Blatt (5) oder an einem drehfest mit dem Blatt (5) verbundenen Organe biegeverformt.

7. Rotor nach Anspruch 5, **dadurch gekennzeichnet, dass** er mindestens eine drehende Leitung (30-34) aufweist, die mindestens einen im Wesentlichen schraubenförmigen, flexiblen Abschnitt (30) um die Drehachse (Z-Z) aufweist, um die relativen axialen Verschiebungen zwischen dem Kollektor (20) und der Einheit aus Mast (1) und Nabe (2) zu kompensieren, und der sich zwischen dem Rotorteil (22) des Kollektors (20) und einem festen Punkt eines zentralen Teils der Nabe (2) erstreckt, von dem aus die drehende Leitung zu mindestens einem der Blätter (5) des Rotors (R) verlängert werden kann (34).

8. Rotor nach Anspruch 7, **dadurch gekennzeichnet, dass** die drehende Leitung mit ihrem schraubenförmigen, flexiblen Abschnitt (30, 44) zumindest zum Teil in einer rohrförmigen Schutzvorrichtung (39) untergebracht ist, die im Wesentlichen koaxial um die Drehachse (Z-Z) ist und ein erstes rohrförmiges Organ (40) aufweist, das in axialer Translationsverschiebung fest mit der Steuerspinne (11) verbunden und in dem ein erster Abschnitt (41) der drehenden Leitung untergebracht ist, der dem Rotorteil (22, 22') des Kollektors (20, 20') benachbart ist.

9. Rotor nach Anspruch 8, **dadurch gekennzeichnet, dass** der erste Abschnitt (41) der drehenden Leitung exzentrisch an der inneren Peripherie des ersten rohrförmigen Organs (40) gehalten wird, welches mit einem zentralen ringförmigen Teil der Steuerspinne (11) fest verbunden ist.

10. Rotor nach einem der Ansprüche 8 und 9, **dadurch gekennzeichnet, dass** die rohrförmige Schutzvorrichtung (39) ebenfalls ein fest mit der Nabe (2) verbundenes, zweites rohrförmiges Organ (43) aufweist, in dem der flexible, schraubenförmige Abschnitt (44) der drehenden Leitung untergebracht ist.

11. Rotor nach Anspruch 10, **dadurch gekennzeichnet, dass** ein axialer und/oder radialer Abstand zwischen den zwei rohrförmigen Organen (40, 43) aufrechterhalten wird, um jede Interferenz bei ihren jeweiligen axialen Verschiebungen zu vermeiden.

12. Rotor nach einem der Ansprüche 10 und 11, **dadurch gekennzeichnet, dass** die rohrförmige Schutzvorrichtung (39) im Wesentlichen gemäß der Drehachse (Z-Z) teleskopisch ist, wobei das erste rohrförmige Organ (40) sich bei axialen Verschiebungen des Kollektors (20') und der Steuerspinne (11) bezüglich der Einheit aus Mast (1) und Nabe (2) teleskopisch in das zweite rohrförmige Organ (43) einführen kann.

13. Rotor nach einem der Ansprüche 10 bis 12, **dadurch gekennzeichnet, dass** die Schutzvorrichtung (39) ebenfalls einen Faltenbalg (46) aufweist, der eine axiale Flexibilität im Wesentlichen gemäß der Drehachse (Z-Z) hat und das erste rohrförmige Organ (40) und zumindest zum Teil das zweite rohrförmige Organ (43) umhüllt, auf dem der Faltenbalg (46) über eines seiner axialen Enden gehalten wird, während sein anderes axiales Ende an der Steuerspinne (11) oder einem Endbereich des ersten rohrförmigen Organs (40) gehalten wird, der mit der Steuerspinne (11) verbunden ist, um einen Schutz des Zwischenraums zwischen den zwei rohrförmigen Organen (40, 43) zu gewährleisten.

14. Rotor nach Anspruch 12, **dadurch gekennzeichnet, dass** zusätzliche Drehführungsmittel (50, 51, 52) zwischen den zwei rohrförmigen Organen (40, 43) der Schutzvorrichtung (39) eingerichtet sind, um einen Torsionsanschlag zu bilden, der die relativen Drehbewegungen der zwei rohrförmigen Organe (40, 43) begrenzt.

15. Rotor nach Anspruch 14, **dadurch gekennzeichnet, dass** die Mittel zur zusätzlichen Drehführung mindestens einen Verdrehsicherungsring (50) aufweisen, der mit mindestens einem radialen Finger (51) versehen ist, der zur Innenseite des zweiten rohrförmigen Organs (43) vorsteht und axial in einem Langloch (52) gleiten kann, das im ersten rohrförmigen Organ (40) ausgebildet ist, mit einem axialen Spiel zwischen jedem Finger (51) des Rings (50) und dem entsprechenden Fenster (52), um jede Blockierung der Blattverstellsteuerung zu vermeiden.
